(19) Europäisches Patentamt
European Patent Office
Office européen des brevets

(11) **EP 3 896 840 B1**

(12) **EUROPÄISCHE PATENTSCHRIFT**

(45) Veröffentlichungstag und Bekanntmachung des Hinweises auf die Patenterteilung:
**30.04.2025 Patentblatt 2025/18**

(21) Anmeldenummer: **21161177.7**

(22) Anmeldetag: **08.03.2021**

(51) Internationale Patentklassifikation (IPC):
*H02P 6/18* (2016.01)    *H02P 21/18* (2016.01)

(52) Gemeinsame Patentklassifikation (CPC):
**H02P 6/187; H02P 21/18**

(54) **REGELUNGSVORRICHTUNG UND VERFAHREN ZUR REDUKTION DES KOMMUTIERUNGSWINKELFEHLERS BEI EINEM EC-MOTOR**

CONTROL DEVICE AND METHOD FOR REDUCING COMMUTATION ANGLE ERROR IN AN EC MOTOR

DISPOSITIF DE RÉGULATION ET PROCÉDÉ DE RÉDUCTION DE L'ERREUR D'ANGLE DE COMMUTATION DANS UN MOTEUR EC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2020 DE 102020110419**

(43) Veröffentlichungstag der Anmeldung:
**20.10.2021 Patentblatt 2021/42**

(73) Patentinhaber: **ebm-papst Mulfingen GmbH & Co. KG**
**74673 Mulfingen (DE)**

(72) Erfinder:
• **KROTSCH, Jens**
 **97996 Niederstetten (DE)**
• **LEY, Thomas**
 **97990 Weikersheim-Laudenbach (DE)**
• **GONDALIYA, Hiren**
 **76532 Baden Baden (DE)**

(74) Vertreter: **Staeger & Sperling Partnerschaftsgesellschaft mbB**
**Sonnenstraße 19**
**80331 München (DE)**

(56) Entgegenhaltungen:
**EP-A1- 2 709 267    DE-A1- 10 213 375**
**DE-A1- 4 437 793**

**Beschreibung**

Die Erfindung betrifft eine Regelungsvorrichtung und ein Verfahren zur Reduktion des Kommutierungswinkelfehlers bei einem EC-Motor.

Um z. B. einen permanent erregten Synchronmotor (PMSM) feldorientiert anzusteuern, muss die Lage des Rotors bezüglich des Stators bekannt sein. Man spricht dabei von einer Winkellage innerhalb einer magnetischen Periode des Motors, oder auch vom sogenannten Kommutierungswinkel. Es ist bekannt, zur Ansteuerung von EC-Motoren die Läuferposition des Läufers mittels einer Positionsmesseinrichtung zu erfassen und bei bekannter relativer Lage zwischen der tatsächlichen Läuferposition und der mittels der Positionsmesseinrichtung erfassten Läuferposition einen Kommutierungsoffset oder Kommutierungswinkelfehler zu berechnen und bei der Ansteuerung eines den Motor speisenden Leistungsteils, beispielsweise einer Kommutierungseinrichtung in Form eines Umrichters, zu verwenden.

Der Kommutierungswinkelfehler, welcher auch als Kommutierungsoffset oder die elektrische Winkelabweichung bezeichnet wird, ist demnach die Abweichung der tatsächlichen Rotordrehstellung zur ermittelten Rotordrehstellung bzw. Rotorposition.

Die Erfassung der Rotorposition kann sowohl mit einem absoluten Positionsmeßsystem, bei dem die Rotorposition unmittelbar nach der Aktivierung des EC-Motors erfasst wird, als auch mit einem inkrementalen Positionsmeßsystem erfolgen, bei dem erst nach dem Überfahren einer oder mehrerer Referenzmarken die absolute Läuferposition ermittelt wird.

Ist der Kommutierungsoffset, d. h. die Phasenabweichung zwischen der tatsächlichen Läuferposition und der mit der Positionsmesseinrichtung erfassten Läuferposition bekannt, so kann die um den Kommutierungsoffset korrigierte, gemessene Läuferposition der Ansteuerung der Synchronmaschine zugrunde gelegt werden. Im Stand der Technik sind insofern eine Reihe von Verfahren bekannt, die sich mit dem Thema der Erfassung des Kommutierungsoffsets beschäftigen und der Frage, wie man in der Regelungseinrichtung den Offset entsprechend bei der Kommutierung berücksichtigt.

In der nachfolgenden Beschreibung soll unter den Begriffen "Rotor" und "Stator" nur die funktionsmäßige Bezeichnung der Grundelemente eines Elektromotors gemeint sein, welche sich entweder relativ zu einem äußeren Koordinatensystem in der Lage verändern (drehen oder verschieben) - der Rotor - oder bezüglich des äußeren Koordinatensystems fixiert sind - der Stator. Insbesondere beim Starten des EC-Motors ist es wünschenswert, die genaue Winkelposition bzw. Lage des Rotors relativ zum jeweils dazugehörigen Stator zu kennen, um ein geeignetes Drehmoment auf den Rotor erzeugen zu können. Bei bekannten Verfahren oder Vorrichtungen erhält man die Winkelposition über eine absolute Positionsmessung mittels Sensoren, inkremental oder alternativ mit den im Stand der Technik bekannten Lösungen bei einer sensorlosen Kommutierung.

Zur Feststellung des Kommutierungswinkels sind aus dem Stand der Technik zahlreiche weitere Verfahren bekannt. Neben den zahlreichen Verfahren, die den Kommutierungswinkel über eine Messung von elektrotechnischen Größen wie der Induktivität oder der magnetischen Sättigung bestimmten, gibt es auch viele Verfahren, die auf einer Bestromung des Motors und die Feststellung von mehr oder weniger großen Auslenkungen des Rotors beruhen.

Aus der DE 10213375 A1 ist es bekannt, einem Synchronmotor unter feldorientierter Regelung von außen eine Bewegung einzuprägen und dabei dem Regelkreis einen Sollstrom von null vorzugeben. Vom Regelkreis werden daher Spannungen erregt, die den im Motor durch die Bewegung induzierten Spannungen entgegen wirken. Aus der Phasenlage dieser Spannungen kann auf den Kommutierungswinkel geschlossen werden.

In der DE 4437793 A1 ist ein zweistufiges Verfahren zur Bestimmung der Phasenlage des Rotors beschrieben, bei dem die Phasenlage zunächst grob und dann fein bestimmt wird. Dabei werden kleine, durch Anlegen von Stromvektoren verursachte Auslenkungen des zunächst ruhenden Rotors erfasst und daraus dessen Phasenlage bestimmt. Eine weitere Möglichkeit zur Feststellung des Kommutierungswinkels besteht darin, an den Synchronmotor einen momentbildenden Strom in einer beliebig gewählten Orientierung anzulegen. Der Rotor wird sich dann bewegen und parallel zu dieser Richtung ausrichten. Damit sind seine Lage und der Kommutierungswinkel erfassbar. Ebenso sind im Stand der Technik diverse Verfahren bekannt, um den Kommutierungswinkelfehler zu ermitteln. So kann beispielsweise der Kommutierungswinkelfehler aus der Sternpunktdifferenzspannung ermittelt werden.

Mit Kenntnis des Kommutierungswinkels als auch des Kommutierungswinkelfehlers ist der Einfluss des Kommutierungswinkelfehlers aber nicht eliminiert. Dieser Kommutierungswinkelfehler kann zur Instabilität des Betriebs des Motors führen. Die im Stand der Technik bekannten Lösungen zielen aber nicht auf eine Vermeidung des Kommutierungswinkelfehlers ab, sondern auf eine regelungstechnische Korrektur beim Regeln des Motors. Der Kommutierungswinkelfehler entsteht durch die Phasenverschiebung der Sternpunktdifferenzspannung aufgrund des feldschwächenden Stroms (d-Strom-Anteil).

Die Phasenverschiebung der Sternpunktdifferenzspannung bezeichnet dabei die Phasenverschiebung des Anteils der dritten Harmonischen in der Sternpunktdifferenzspannung gegenüber der Grundwelle und führt zum besagten Kommutierungswinkelfehler. Die Phasenverschiebung ist die Verschiebung zwischen der Grundwelle der Polradspannung und dem Strom in einem Strang, bzw. auch der Funktionswert des Arkustangens aus dem Verhältnis des feldbildenden Stroms (d-Strom) zum drehmomentbildenden Strom (q-Strom).

Bei EC-Motoren bei denen es aufgrund von flussbildenden als auch durch drehmomentbildende Stromkomponenten eine ausgeprägte Phasenverschiebung in der Sternpunktdifferenzspannung und folglich einen Fehler in der Rotordrehstellungsermittlung gibt, tritt ein entsprechender Kommutierungswinkelfehler systembedingt ohne weitere Gegenmaßnahmen auf. Eine positive Phasenverschiebung ist insoweit schlecht, als es zu einem sogenannten Mittkopplungseffekt kommt, was bedeutet, dass ein steigernder Winkelfehler wiederum zu einem steigenden Strom und Stromwinkel führt und beides wiederum zu einem weiter steigenden Winkelfehler und in seiner Konsequenz zum Ausfall des Motors. Im ungünstigen Fall verhindert diese Mittkopplung, den bestimmungsgemäßen Betrieb des EC-Motors.

Ferner lassen sich bei EC-Motoren mit einer stromabhängigen Induktivität viele der im Stand der Technik bekannten Korrekturverfahren nicht anwenden.

Weiterer druckschriftlicher Stand der Technik im vorliegenden technischen Gebiet ist in dem Dokument EP 2 709 267 A1 offenbart.

Der Erfindung liegt deshalb die Aufgabe zugrunde, nicht die Folgen des Kommutierungswinkelfehlers zu reduzieren, sondern einen strom- bzw. sättigungsbedingten Kommutierungswinkelfehler grundsätzlich zu vermeiden oder signifikant zu reduzieren.

Diese Aufgabe wird durch die Merkmalskombinationen der unabhängigen Ansprüche 1 und 6, die die Erfindung definieren, gelöst.

Ein Grundgedanke der vorliegenden Erfindung liegt darin, die Rotorpositionserfassung mittels des Sternpunktpotentials zu erfassen und mittels einer Regelungsvorrichtung unter insbesondere der Verwendung eines Regelkreises dem Motorsteuerungssystem eine bestimmungsgemäß feldschwächende Stromkomponente (FSK) einzuprägen.

Als feldschwächende Stromkomponente wird derjenige Stromanteil bezeichnet, der ein, dem magnetischen Feld des Permanentmagneten des EC-Motors entgegenwirkendes Magnetfeld erzeugt. Eine solche feldschwächende Stromkomponente kann der feldschwächende Strom (negativer d-Strom) sein oder eine entsprechendePhasenverschiebung.

Das zentrale Konzept zur Reduktion bzw. Vermeidung eines systembedingten Winkelfehlers ist die Einprägung einer feldschwächenden Stromkomponente (FSK).

Eine Eigenschaft der feldschwächenden Stromkomponente ist die Abhängigkeit von Betriebsgrößen, wie dem Strom, dem Aussteuergrad oder dem Drehmoment bzw. einer mit einem Betriebsparameter in Verbindung stehende Systemgröße, somit:

a) Strom (wie z. B. drehmomentbildende Stromkomponente Iq, Gesamtstrom I, Zwischenkreisstrom Izk,

b) Aussteuergrad A,

c) Drehzahl n,

d) Drehmoment M oder

e) auch einer Kombination daraus, wie z. B. einer Lüfterkennlinie bei einem mit dem EC-Motor angetriebenen Lüfter.

Ein weiterer Aspekt betrifft die Funktionsdefinition, die die feldschwächende Stromkomponente (FSK) in Bezug zu einer der Betriebsgrößen besitzt. Der Zusammenhang zwischen feldschwächender Stromkomponente und dem Drehmoment kann z. B. als Konstante, als lineare Funktion, als Funktion mit Offset oder als ein Polynom höherer Ordnung festgelegt sein. Die Festlegung kann frei gewählt sein oder durch die Vorgabe eines Max-Wertes und eines Min-Wertes erfolgen, welche die Grenzen festlegt.

Ein noch weiterer Aspekt betrifft die Auswahl eines geeigneten Wertebereiches. Ein sinnvoller Wertebereich für die feldschwächende Stromkomponente wird durch zulässige Randbedingungen beschränkt, wie z. B. durch eine akzeptierte Reduzierung des Drehmoments, verursacht durch die feldschwächende Stromkomponente FSK.

Erfindungsgemäß wird eine Regelungsvorrichtung vorgeschlagen, die konkret zur Reduktion des Kommutierungswinkelfehlers ε eines dreiphasig über eine Sternschaltung angeschlossenen EC-Motors ausgebildet ist, dessen drei Phasen über eine Motorsteuerung kommutiert werden, aufweisend eine Rotorpositionserfassung, um mittels des Sternpunktpotentials am Sternpunkt der Sternschaltung die relative Winkellage des Rotors zu erfassen, sowie einen Regelkreis, der ausgebildet ist der Motorsteuerung eine bestimmungsgemäß feldschwächende Stromkomponente zur Reduktion des Kommutierungswinkelfehlers ε einzuprägen.

In einer weiteren bevorzugten Ausführungsform der Erfindung ist vorgesehen, dass eine Signalverarbeitungseinrichtung vorgesehen ist, welche Betriebsdaten des EC-Motors, die in Abhängigkeit zu der feldschwächende Stromkomponente (FSK) stehen, zu erfassen, um diese einem Controller der Motorsteuerung für die Steuerungsaufgabe zuzuführen.

Ein weiterer Aspekt der vorliegenden Erfindung betrifft neben der genannten Vorrichtung ein Verfahren zur Reduktion des Kommutierungswinkelfehlers $\varepsilon$ eines dreiphasig über eine Sternschaltung angeschlossenen EC-Motors, dessen drei Phasen über eine Motorsteuerung kommutiert werden, vorzugsweise unter Verwendung einer wie zuvor definierten Regelungsvorrichtung, wobei eine Rotorpositionserfassung aus dem Sternpunktpotential am Sternpunkt der Sternschaltung der Motorphasen erfolgt und eine feldschwächende Stromkomponente (FSK) zur Reduktion des Kommutierungswinkelfehlers einer Kommutierungseinrichtung zum Kommutieren des Motors eingeprägt wird.

In einer vorteilhaften Ausgestaltung des Verfahrens ist vorgesehen, dass die feldschwächende Stromkomponente in ihrer Größe konstant ist. Alternativ kann vorgesehen sein, dass die feldschwächende Stromkomponente eine lineare oder nichtlineare Funktion insbesondere in Abhängigkeit einer Betriebsgröße des EC-Motors, weiter vorzugsweise in Abhängigkeit des Drehmoments M oder des Stroms des EC-Motors ist. Denkbar sind allerdings auch andere Betriebsgrößen, wie z. B. der Aussteuergrad, die Drehzahl oder die Lüfterkennlinie eines mit dem EC-Motor betriebenen Lüfters.

In einer weiteren vorteilhaften Ausführungsform des erfindungsgemäßen Verfahrens ist vorgesehen, dass die feldschwächende Stromkomponente aus dem Kurvenverlauf der Kurve

$$FSK = FSK\ (\varepsilon,\ Pi)$$

für einen bestimmten Betriebsparameter Pi des EC-Motors erfasst wird, wobei hierzu zunächst der Kurvenverlauf der Kurve $\varepsilon = \varepsilon$ (FSK) ermittelt wird, der den Zusammenhang der Winkelabweichung $\varepsilon$ zur feldschwächende Stromkomponente FSK angibt und darauf basierend aus dem Schnittpunkte der Kurve FSK ($\varepsilon$, Pi) bei dem eine maximal zulässige Winkelabweichung $\varepsilon_{max}$ festgelegt ist, ein konstante Stromkomponente zur Einprägung bestimmt wird.

In einer weiteren Ausführungsform der Erfindung ist vorgesehen, dass die feldschwächende Stromkomponente aus dem Kurvenverlauf der jeweiligen Funktion FSK = FSK ($\varepsilon$, Pi) von wenigstens zwei oder mehreren Kurvenverläufen der jeweiligen Kurve für jeweils einen unterschiedlichen Betriebsparameter ermittelt werden, vorzugsweise für unterschiedliche Drehmomente des EC-Motors erfasst werden, und daraus der funktionale Zusammenhang zwischen dem besagten Betriebsparameter und der feldschwächenden Stromkomponente erhalten wird, wobei hierzu zuvor der jeweilige Kurvenverlauf der Kurve für unterschiedliche Werte eines bestimmten Betriebsparameters (z. B. unterschiedliche Drehmomente):

$$FSK = FSK\ (\varepsilon,\ Pi)$$

ermittelt wird, der den Zusammenhang der Winkelabweichung $\varepsilon$ zur feldschwächenden Stromkomponente angibt und darauf basierend aus den jeweiligen Schnittpunkten der Kurven FSK ($\varepsilon$, Pi) bei denen jeweils eine vorbestimmte zulässige Winkelabweichung $\varepsilon_{def}$ festgelegt ist, eine Stromkomponente zur Einprägung bestimmt wird. Diese kann z. B. durch lineare Approximation oder Mittelwertbildung der ermittelten Schnittpunkt-Werte erfolgen.

In einer ebenfalls vorteilhaften Ausführungsform der Erfindung ist vorgesehen, dass zunächst der Kurvenverlauf derjenigen Kurve $\varepsilon = \varepsilon$ (FSK) ermittelt wird, die den Zusammenhang der Winkelabweichung $\varepsilon$ zur feldschwächenden Stromkomponente FSK angibt und daraus zunächst diejenige Winkelabweichung $\varepsilon_{krit}$ aus der Verlaufskurve ermittelt wird, bei der der EC-Motor nicht mehr in einem bestimmten rotationsstabilen Betriebszustand kommutiert werden kann, indem die zulässige Winkelabweichung $\varepsilon$ sukzessive solange erhöht wird, bis der rotationsstabile Betriebszustand des EC-Motors in einen instabilen Zustand übergeht, der definiert ist, durch den Kurvenpunkt $\varepsilon_{krit}$ am Tangentialanlagepunkt einer Tangente T mit der Steigung ST an die Kurve $\varepsilon = \varepsilon$ (FSK), wobei die Tangente T entlang der Abszisse der Kurve $\varepsilon = \varepsilon$ (FSK) solange verschoben wird, bis die Tangente T an einem Kurvenpunkt der Kurve $\varepsilon$ (FSK) tangential anliegt und der Schnittpunkt zwischen der Tangente T und der Abszisse den Wert für die feldschwächende Stromkomponente bestimmt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

Fig. 1     ein Diagramm mit einem Regelkreis gemäß dem Konzept der vorliegenden Erfindung;

Fig. 2     eine grafische Erläuterung der Funktionsdefinition;

Fig. 3     eine grafische Erläuterung zum Festlegen des Wertebereichs;

Fig. 4     ein Ausführungsbeispiel zur Bestimmung bzw. Festlegung eines bestimmten konstanten Wertes für die feldschwächende Stromkomponente;

Fig. 5    ein Ausführungsbeispiel zur Bestimmung bzw. Festlegung eines Wertes für die feldschwächende Stromkomponente in Abhängigkeit eines variierenden Betriebsparameters (hier: des Drehmoments M);

Fig. 6    ein Ausführungsbeispiel zur Bestimmung bzw. Festlegung eines bestimmten Wertes für die feldschwächende Stromkomponente am Übergang zum instabilen Betriebspunkt des EC-Motors;

Fig. 7    ein Ausführungsbeispiel eines EC-Motors eines Lüfters mit einem langsamen Regler;

Fig. 8    eine grafische Erläuterung der Werteermittlung in % in Abhängigkeit der Phasenverschiebung $\lambda$;

Fig. 9    einer grafische Erläuterung der Ermittlung von Zwischenwerten;

Fig. 10    eine Funktionsdarstellung der feldschwächenden Stromkomponente FSK in Abhängigkeit des Quotienten aus dem Zwischenkreisstrom und dem Nennwert des Zwischenkreisstromes und

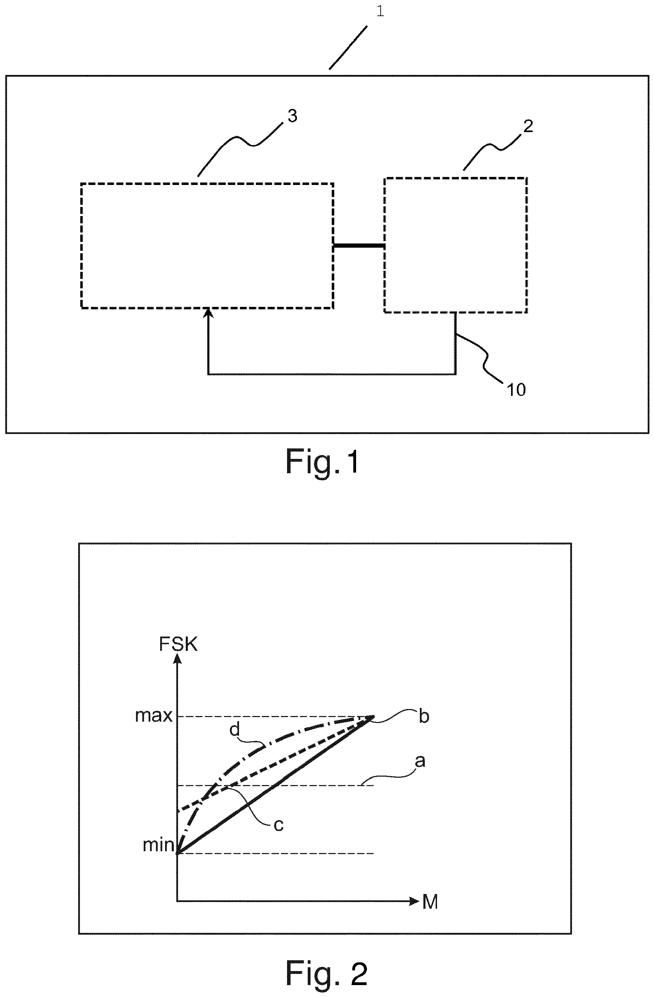

Im Folgenden wird die Erfindung mit Bezug auf die Figuren 1 bis 10 näher

beschrieben, wobei gleiche Bezugszeichen oder Bezeichnungen in den Figuren auf gleiche strukturelle und/oder funktionale Merkmale oder Größen hinweisen, soweit bei der Figurenbeschreibung nicht anders angegeben. Die Fig. 1 zeigt ein Diagramm mit einem Regelkreis 10 gemäß dem Konzept der vorliegenden Erfindung, wobei eine Stellgröße geregelt und an den Kontroller der Motorsteuerung 3 übergeben wird. Die Motorsteuerung 3 steuert die Strangströme u, v, w des EC-Motors (oder allgemein einer PMSM-Maschine). Eine beispielhafte Topologie einer Motorsteuerung 3 umfasst eine Rotor-Positions-Erfassung, eine Signalverarbeitungseinrichtung, den Kontroller, eine Sollwert-Vorgabe (variable FSK Eingabe), eine Steuereinheit, eine Erlangungseinheit (Messeinrichtung mit Signalaufbereitung, ggf. Filter, Offset-Korrektur, Stromsensor zur Stromerfassung, etc.) und die FSK-Berechnungseinheit 11.

Über die Erlangungseinheit erfolgt die Verarbeitung der Motordaten und Weitergabe an den Kontroller 6. Auf diese Weise wird das Einprägen der feldschwächenden Stromkomponente FSK zur Reduktion des Kommutierungs-winkelfehlers $\varepsilon$ realisiert.

Die Fig. 2 stellt eine grafische Erläuterung der Funktionsdefinition dar, welche den Bezug zwischen der der feldschwächenden Stromkomponente FSK zur Reduktion des Kommutierungswinkelfehlers $\varepsilon$ zu einem bestimmten Betriebsparameter erläutert. So zeigt die Fig. 2 exemplarisch den funktionalen Zusammenhang zwischen der feldschwächenden Stromkomponente FSK und dem Drehmoment M, der als Konstante (Kurve a), als lineare Funktion (Kurve b), als eine Funktion mit einem Offset (Kurve c) oder eine Polynomfunktion (Kurve d), insbesondere einem Polynom höherer Ordnung ausgebildet sein kann. Dabei kann die Festlegung wie beispielhaft dargestellt durch die Vorgabe von Minimal- und Maximalwerten $FSK_{min}$, $FSK_{max}$ erfolgen.

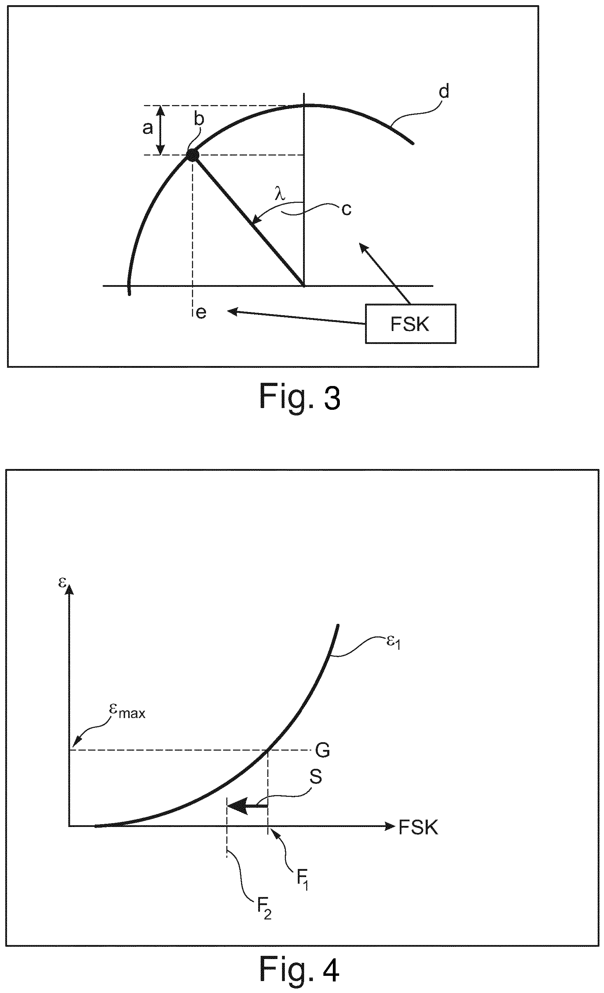

Die Fig. 3 zeigt eine grafische Erläuterung zum Festlegen des Wertebereichs der FSK am Beispiel des Stroms als Betriebsparameters.

Das Festlegen des Max-Werts erfolgt dabei nach dem folgenden Prozess:

1. Akzeptierte Drehmomentreduzierung: Referenz a (typisch zwischen 10% - 25%);

2. Auftragen der Linie gleicher Stromstärke z. B. der Strangstromamplitude als beispielsweise der Strangstrom, z. B. max. zul. konstante Stromstärke: Referenz d;

3. Ermitteln des Schnittpunkts der Drehmomentreduzierung und der Stromlinie aus Schritt 2: Referenz b;

4. Auslesen der maximal zulässige feldschwächende Stromkomponente FSK: Referenz c oder e.

Der so ermittelte, auf 5° aufgerundete, typische Max-Wert für die Phasenverschiebung $\lambda$ beträgt 30° bis 45°.

Das Vorgehen zum Festlegen des Min-Werts erfolgt z. B. durch das Ermitteln der FSK bei dem eine Instabilität des Motorlaufs erfolgt (d. h. der Übergang von einem stabil kommutierten Zustand zu einem instabilen Zustand, bei dem z. B. der Regler ausfällt). Ein typischer Wert für $\lambda$ ist -15° bis 0°. Für das vorliegende Beispiel wäre der Wertebereich für $\lambda$ somit zwischen -15° und 45° festgelegt.

Die Fig. 4 zeigt ein Ausführungsbeispiel zur Bestimmung bzw. Festlegung eines bestimmten konstanten Wertes für die feldschwächende Stromkomponente. 1. Zunächst erfolgt die Ermittlung des Winkelfehlerverlaufs $\varepsilon$ (FSK) in Abhängigkeit von der FSK im Fall der größten Abweichung, hier bei maximalem Drehmoment. Die Ermittlung von $\varepsilon_1$ (FSK) kann durch Berechnung mit FEM oder durch Messung erfolgen. Danach erfolgt das Festlegen der maximal zulässigen

Winkelabweichung $\varepsilon_{max}$ (Referenz G) in der Figur 4. Aus dem Schnittpunkt der Kurven G und $\varepsilon_1$ (FSK), wird der Wert für FSK, hier F1 festgelegt. Ergänzend ist es denkbar einen Sicherheitsfaktor S vorzusehen, so dass sich ein abweichender Wert für FSK aus dem Schnittpunkt mit der Kurve $\varepsilon_1$ (FSK) ergibt, der in der Figur 4 mit der Referenz F2 bezeichnet ist.

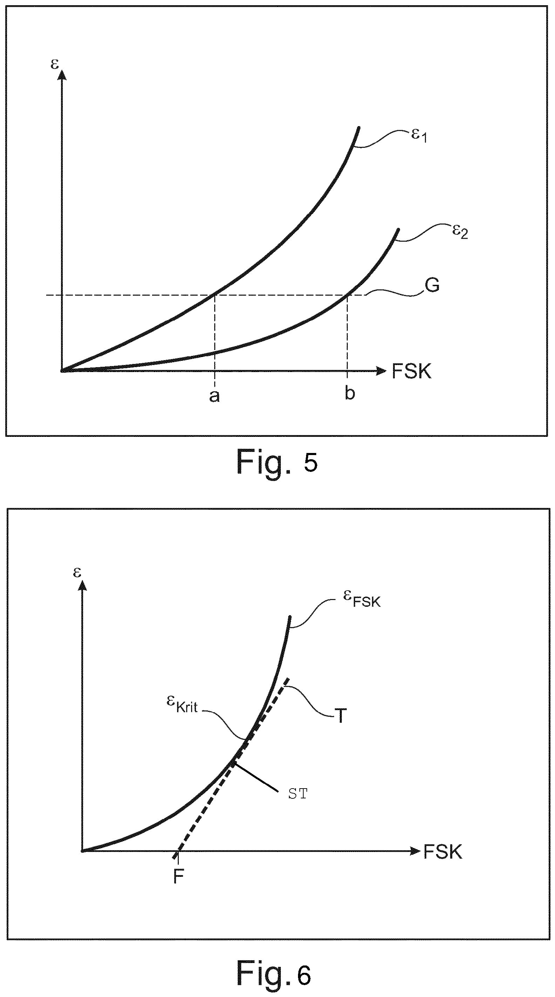

Die Fig. 5 zeigt ein weiteres Ausführungsbeispiel zur Bestimmung bzw. Festlegung eines Wertes für die feldschwächende Stromkomponente FSK in Abhängigkeit eines variierenden Betriebsparameters (hier: des Drehmoments M für zwei unterschiedliche Drehmomentwerte). Der Ablauf der oben beschriebenen Bestimmung des FSK wird hierzu für jeden der beiden Drehmomentwerte wiederholt, wodurch die Schnittpunkte aus den zwei Kurven $\varepsilon$ (FSK) für die Kurve $\varepsilon_1$ und die Kurve $\varepsilon_2$ erfolgt. Man erhält folglich zwei FSK-Werte (Referenz a und b in Figur 5). Die beiden FSK-Werte sind nun abhängig vom jeweils gewählten Drehmoment. Durch beispielsweise eine lineare Interpolation wird ein einfacher funktionaler Zusammenhang zwischen dem Drehmoment M und der FSK hergestellt.

Das gleiche Vorgehen wird gewählt um z. B. den funktionalen Zusammenhang zwischen dem Strom oder einem anderen Betriebsparameter und der FSK zu erhalten.

Die Fig. 6 zeigt ein Ausführungsbeispiel zur Bestimmung bzw. Festlegung eines bestimmten Wertes für die feldschwächende Stromkomponente am Übergang zum instabilen Betriebspunkt des EC-Motors. Hierzu ist vorgesehen, dass zunächst der Kurvenverlauf derjenigen Kurve $\varepsilon = \varepsilon$ (FSK) ermittelt wird, die den Zusammenhang der Winkelabweichung $\varepsilon$ zur feldschwächende Stromkomponente FSK angibt. Eine solche beispielhafte Kurve ist dargestellt. Daraus wird nun folgendermaßen die kritische Winkelabweichung $\varepsilon_{krit}$ aus der Verlaufskurve ermittelt, bei der der EC-Motor nicht mehr in einem bestimmten rotationsstabilen Betriebszustand kommutiert werden kann. Der entsprechende Punkt $\varepsilon_{krit}$ liegt am Tangentialanlagepunkt einer Tangente T mit der Steigung ST (vorzugsweise ST < 1,5), welche an die Kurve $\varepsilon = \varepsilon$ (FSK) tangential angelegt wird, wobei die Tangente T entlang der Abszisse der Kurve $\varepsilon = \varepsilon$ (FSK) solange verschoben wird, bis die Tangente T an dem besagten kritischen Kurvenpunkt der Kurve $\varepsilon$ (FSK) tangential anliegt. Der Schnittpunkt zwischen der Tangente T und der Abszisse FSK ergibt den Wert mit der Referenz F in der Figur 6 für die korrespondierende feldschwächende Stromkomponente.

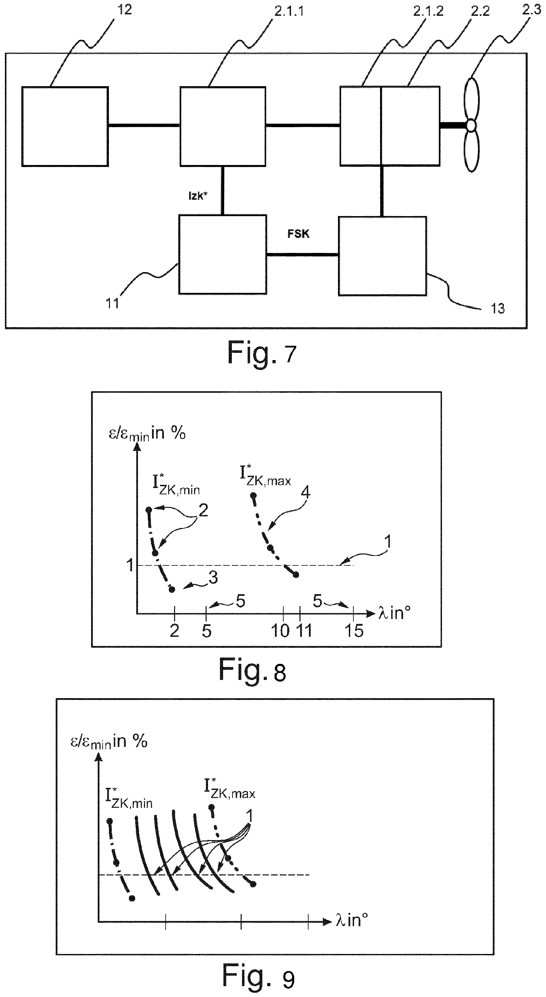

Die Fig. 7 zeigt ein Ausführungsbeispiel eines EC-Motors 2.2 eines Lüfters mit einem langsamen Regler 13. Das Ausführungsbeispiel umfasst einen Netzanschluss 12, den Umrichter 2.1 (Gleichrichter 2.1.1 und den motorseitigen Umrichter 2.1.2), der einen Zwischenkreis mit Messung des Zwischenkreisstroms $I^*_{ZK}$ bereitstellt. An diesem ist ein EC-Motor 2.2 mit einer FSK-Regelung 13 (mit Sollwert $\lambda$ = FSK) angeschlossen. Der EC-Motor 2 treibt einen Ventilator 2.3 an.

Die FSK-Berechnungseinheit mit dem Bezugszeichen 11 dient der Ermittlung der feldschwächenden Stromkomponente FSK und der Begrenzung, in diesem Ausführungsbeispiel nach dem folgenden Rechenschema:

$$FSK = \lambda = k_1 \cdot I^*_{ZK} + k_2 \quad \text{wobei} \quad k_1 = 10°/0{,}8 \text{ und } k_2 = 3{,}75°$$

Die Ermittlung der Werte für die Faktoren $k_1$ und $k_2$, für die Berechnung von FSK wird mit Bezug auf die Figuren 8 bis 10 erläutert. In der Figur 8 erfolgt die Werteermittlung für die Fehlerwerte $\varepsilon/\varepsilon_{max}$ in % in Abhängigkeit der Phasenverschiebung $\lambda$. Die Kurve für $\varepsilon/\varepsilon_{max}= 1$ ist mit der Referenz 1 in der Fig. 8 bezeichnet, was somit die zulässige Fehlergrenze definiert. Durch schrittweise oder sukzessives Ändern von $\lambda$ werden die Fehlerwerte $\varepsilon/\varepsilon_{max}$ zunächst beim geringsten Belastungszustand gemessen (siehe Referenz 2 in der Figur 8). Ermitteln des Wertes $\lambda$ unterhalb des festgelegten Fehlergrenzwertes für diesen Fall. In diesem Ausführungsbeispiel ergibt sich hierfür: $I^*_{ZK,min} \sim 0,1$, was einem Phasenwinkel von 2° entspricht (siehe Referenz 3 in der Fig. 8).

Danach erfolgt die gleiche Vorgehensweise bei höchstem Belastungszustand. In diesem Ausführungsbeispiel ergibt sich hierfür: $I^*_{ZK,max} \sim 0,9$, was einem Phasenwinkel von 11° entspricht (siehe Referenz 4 in der Fig. 8).

In einem nachfolgenden Schritt erfolgt die Wahl jeweils der Werte für 5° und 15° (siehe Referenz 5 in der Fig. 8).

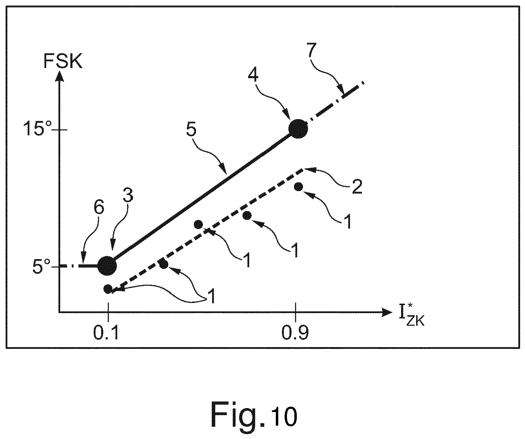

In der Fig. 9 findet sich eine grafische Erläuterung der Ermittlung von Zwischenwerten und die Fig. 10 zeigt eine Funktionsdarstellung der feldschwächenden Stromkomponente FSK in Abhängigkeit des Quotienten aus dem Zwischenkreisstrom und dem Nennwert des Zwischenkreisstromes.

Es bedarf dann die Festlegung des funktionalen Zusammenhangs zum FSK durch Messung der Zwischenwerte zwischen $I^*_{ZK,min}$ und $I^*_{ZK,max}$ was im Folgenden mit Bezug auf die Figur 9 erläutert wird (siehe Referenz 1 in Fig.9).

Die jeweilige Messung für die Zwischenwerte erfolgt entsprechend der Schritte, wie in Fig. 8 zur Bestimmung der Min.- und Max.-Werte beschrieben (d. h. betreffend der Referenzen 1 bis 4 der Fig. 8) Die gemesseneren Zwischenwerte zeigen in diesem Beispiel einen nahezu linearen Anstieg beim funktionalen Zusammenhang zwischen dem FSK und dem Zwischenkreisstroms $I^*_{ZK}$, was in der Fig. 10 ersichtlich ist (siehe Referenz 2 in der Fig. 10).

Nun werden noch die Werte für 5° und 15° aus der Fig. 8 übernommen (diese entsprechen der Referenz 3 und 5 in der Figur 10), so dass sich aus der Steigung und den ermittelten Werten der oben genannte funktionale Zusammenhang ergibt: $FSK = \lambda = (10°/0{,}8) \cdot I^*_{ZK} + 3{,}75°$.

Außerhalb des gemessenen Bereichs wird bei kleineren Stromwerten der kleinste FSK-Wert festgehalten und bei größeren Stromwerten die Werte für FSK mit der berechneten Funktion linear extrapoliert.

**EP 3 896 840 B1**

**Patentansprüche**

1. Regelungsvorrichtung (1) ausgebildet zur Reduktion des Kommutierungswinkelfehlers ε eines dreiphasig (u,v,w) über eine Sternschaltung angeschlossenen EC-Motors (2.2), dessen drei Phasen (u,v,w) über eine Motorsteuerung (3) kommutiert werden, aufweisend eine Rotorpositionserfassung (4), um mittels des Sternpunktpotentials am Sternpunkt der Sternschaltung die relative Winkellage des Rotors zu erfassen, sowie einen Regelkreis (10), der ausgebildet ist der Motorsteuerung (3) eine bestimmungsgemäß feldschwächende Stromkomponente (FSK) zur Reduktion des Kommutierungswinkelfehlers ε einzuprägen.

2. Regelungsvorrichtung (1) nach Anspruch 1, **dadurch gekennzeichnet, dass** eine FSK-Berechnungseinheit (11) mit einer messtechnischen Erlangungseinheit (9) und einer Sollwertvorgabe (7) zur Eingabe einer variablen feldschwächenden Stromkomponente steuerungstechnisch verbunden ist, um der Motorsteuerung (3) eine bestimmte feldschwächende Stromkomponente zur Reduktion des Kommutierungswinkelfehlers ε einzuprägen.

3. Regelungsvorrichtung (1) nach Anspruch 2, **dadurch gekennzeichnet, dass** ferner eine Signalverarbeitungseinrichtung (5) vorgesehen ist, um Betriebsdaten des EC-Motors (2.2), die in Abhängigkeit zu der feldschwächenden Stromkomponente stehen, zu erfassen und einem Controller (6) der Motorsteuerung (3) zuzuführen.

4. Regelungsvorrichtung (1) nach Anspruch 1, 2 oder 3, **dadurch gekennzeichnet, dass** als feldschwächende Stromkomponente der feldschwächende Strom (negativer d-Strom) oder ein bestimmter Phasenwinkelwert verwendet werden.

5. Regelungsvorrichtung (1) nach einem der vorhergehenden Ansprüche, **dadurch gekennzeichnet, dass** zur Einprägung einer feldschwächenden Stromkomponente eine Stromkomponente verwendet wird, die in Abhängigkeit von Betriebsgrößen, wie dem Strom, dem Aussteuergrad oder dem Drehmoment des Motors in Verbindung steht.

6. Verfahren zur Reduktion des Kommutierungswinkelfehlers ε eines dreiphasig (u, v, w) über eine Sternschaltung angeschlossenen EC-Motors (2), dessen drei Phasen (u, v, w) über eine Motorsteuerung (3) kommutiert werden, vorzugsweise unter Verwendung einer Regelungsvorrichtung (1) gemäß einem der Ansprüche 1 bis 5, wobei eine Rotorpositionserfassung (4) aus dem Sternpunktpotential am Sternpunkt der Sternschaltung der Motorphasen (u, v, w) erfolgt und eine feldschwächende Stromkomponente (FSK) zur Reduktion des Kommutierungswinkelfehlers ε Motorsteuerung (3) zum Kommutieren des EC-Motors (2.2) eingeprägt wird.

7. Verfahren nach Anspruch 6, **dadurch gekennzeichnet, dass** die feldschwächende Stromkomponente in ihrer Größe konstant ist.

8. Verfahren nach Anspruch 6, **dadurch gekennzeichnet, dass** die feldschwächende Stromkomponente eine lineare oder nichtlineare Funktion insbesondere in Abhängigkeit einer Betriebsgröße (Pi) des EC-Motors (2.2), insbesondere in Abhängigkeit des Drehmoments M oder des Stroms des EC-Motors ist.

9. Verfahren nach Anspruch 6 oder 7, **dadurch gekennzeichnet, dass** die feldschwächende Stromkomponente aus dem Kurvenverlauf einer Kurve FSK = FSK (ε, Pi) für einen bestimmten Betriebsparameter (Pi), vorzugsweise ein bestimmtes Drehmoment M des EC-Motors (2.2) erfasst wird, wobei hierzu zunächst der Kurvenverlauf ε = ε (FSK) ermittelt wird, der den Zusammenhang der Winkelabweichung ε zur feldschwächende Stromkomponente angibt und darauf basierend aus dem Schnittpunkte der Kurve FSK (ε, Pi) bei dem eine maximal zulässige Winkelabweichung $\varepsilon_{max}$ festgelegt ist, ein konstante Stromkomponente zur Einprägung bestimmt wird.

10. Verfahren nach einem der Ansprüche 6, 7 oder 8 **dadurch gekennzeichnet, dass** die feldschwächende Stromkomponente aus dem Kurvenverlauf der jeweiligen Funktion FSK (ε, Pi) von wenigstens zwei oder mehreren Kurvenverläufen der jeweiligen Kurve FSK (ε, Pi) für jeweils einen unterschiedlichen Betriebsparameter (Pi) ermittelt wird, vorzugsweise für unterschiedliche Drehmomente Mi des EC-Motors (2.2) erfasst werden, und daraus der funktionale Zusammenhang zwischen dem Betriebsparameter (Pi) und der feldschwächende Stromkomponente erhalten wird, wobei hierzu zuvor der jeweilige Kurvenverlauf FSK (ε, Pi) ermittelt wird, der den Zusammenhang der Winkelabweichung ε zur feldschwächende Stromkomponente angibt und darauf basierend aus den jeweiligen Schnittpunkten der Kurven FSK (ε, Pi) bei denen jeweils eine vorbestimmte zulässige Winkelabweichung $\varepsilon_{def}$ festgelegt ist, eine Stromkomponente zur Einprägung bestimmt wird.

11. Verfahren nach einem der Ansprüche 6 bis 8, wobei der Kurvenverlauf ε = ε (FSK) ermittelt wird, der den Zusammen-

hang der Winkelabweichung $\varepsilon$ zur feldschwächende Stromkomponente angibt und daraus zunächst diejenige Winkelabweichung $\varepsilon_{krit}$ aus der Verlaufskurve ermittelt wird, bei der der EC-Motor (2.2) nicht mehr in einem bestimmten rotationsstabilen Betriebszustand kommutiert werden kann, indem die zulässige Winkelabweichung $\varepsilon$ sukzessive solange erhöht wird, bis der rotationsstabile Betriebszustand des EC-Motors in einen instabilen Zustand übergeht, der definiert ist durch den Kurvenpunkt $\varepsilon_{krit}$ am Tangentialanlagepunkt einer Tangente T mit der Steigung ST an die Kurve $\varepsilon = \varepsilon$ (FSK), wobei die Tangente T entlang der Abszisse FSK solange verschoben wird, bis die Tangente T an einem Kurvenpunkt der Kurve $\varepsilon$ (FSK) tangential anliegt und der Schnittpunkt zwischen der Tangente T und der Abszisse den Wert für die feldschwächende Stromkomponente bestimmt.

**Claims**

1. Control device (1) designed to reduce the commutation angle error $\varepsilon$ of a three-phase (u,v,w) EC motor (2.2) connected via a star connection, the three phases (u,v,w) of which are commutated via a motor controller (3), having a rotor position detection (4) in order to detect the relative angular position of the rotor by means of the star point potential at the star point of the star connection, and a control circuit (10) which is designed to impress a field-weakening current component (FSK) into the motor controller (3) in order to reduce the commutation angle error $\varepsilon$.

2. Control device (1) according to claim 1, **characterized in that** an FSK calculation unit (11) is connected in terms of control technology to a measurement acquisition unit (9) and a setpoint specification (7) for inputting a variable field-weakening current component in order to impress a specific field-weakening current component on the motor control (3) for reducing the commutation angle error $\varepsilon$.

3. Control device (1) according to claim 2, **characterized in that** a signal processing device (5) is also provided to detect operating data of the EC motor (2.2), which are dependent on the field-weakening current component, and to supply them to a controller (6) of the motor control (3).

4. Control device (1) according to claim 1, 2 or 3, **characterized in that** the field-weakening current (negative d-current) or a certain phase angle value is used as the field-weakening current component.

5. Control device (1) according to any one of the preceding claims, **characterized in that** a current component is used to impress a field-weakening current component which is related as a function of operating variables, such as the current, the control level or the torque of the motor.

6. Method for reducing the commutation angle error $\varepsilon$ of a three-phase (u, v, w) EC motor (2) connected via a star connection, the three phases (u, v, w) of which are commutated via a motor controller (3), preferably using a control device (1) according to one of claims 1 to 5, wherein a rotor position detection (4) takes place from the star point potential at the star point of the star connection of the motor phases (u, v, w) and a field-weakening current component (FSK) for reducing the commutation angle error $\varepsilon$ is impressed on the motor controller (3) for commutating the EC motor (2.2).

7. Method according to claim 6, **characterized in that** the field-weakening current component is constant in magnitude.

8. Method according to claim 6, **characterized in that** the field-weakening current component is a linear or non-linear function, in particular as a function of an operating variable (Pi) of the EC motor (2.2), in particular as a function of the torque M or the current of the EC motor.

9. Method according to claim 6 or 7, **characterized in that** the field-weakening current component is detected from the curve of a curve FSK = FSK ($\varepsilon$, Pi) for a specific operating parameter (Pi), preferably a specific torque M of the EC motor (2.2), wherein for this purpose the curve $\varepsilon = \varepsilon$ (FSK) is first determined, which indicates the relationship of the angular deviation $\varepsilon$ to the field-weakening current component and based on this, a constant current component for impression is determined from the intersection point of the curve FSK ($\varepsilon$, Pi) at which a maximum permissible angular deviation $\varepsilon_{max}$ is specified.

10. Method according to one of claims 6, 7 or 8, **characterized in that** the field-weakening current component is determined from the curve of the respective function FSK ($\varepsilon$, Pi) of at least two or more curves of the respective curve FSK ($\varepsilon$, Pi) for a different operating parameter (Pi), preferably for different torques Mi of the EC motor (2.2), and the functional relationship between the operating parameter (Pi) and the field-weakening current component is obtained therefrom, wherein for this purpose the respective curve FSK ($\varepsilon$, Pi) is determined beforehand, which indicates the relationship between the angular deviation e and the field-weakening current component and based on this, a current component for impression is determined from the respective intersection points of the curves FSK ($\varepsilon$, Pi), for each of which a predetermined permissible angular deviation $\varepsilon_{def}$ is specified.

11. Method according to one of claims 6 to 8, wherein the curve $\varepsilon = \varepsilon$ (FSK) is determined, which indicates the relationship between the angular deviation $\varepsilon$ and the field-weakening current component, and from this the angular deviation $\varepsilon_{krit}$ is determined from the curve at which the EC motor (2.2) can no longer be commutated in a certain rotationally stable operating state, by successively increasing the permissible angular deviation $\varepsilon$ until the rotationally stable operating state of the EC motor changes into an unstable state, which is defined by the curve point $\varepsilon_{krit}$ at the tangential point of a tangent T with the slope ST to the curve $\varepsilon = \varepsilon$ (FSK), whereby the tangent T is shifted along the abscissa FSK until the tangent T is tangential to a curve point of the curve $\varepsilon$ (FSK) and the intersection point between the tangent T and the abscissa determines the value for the field-weakening current component.

## Revendications

1. Dispositif de régulation (1), réalisé pour réduire l'erreur d'angle de commutation $\varepsilon$ d'un moteur EC (2.2) connecté en triphasé (u, v, w) par un couplage en étoile, dont les trois phases (u, v, w) sont commutées par une commande de moteur (3), présentant une détection de position de rotor (4) pour détecter au moyen du potentiel de point neutre au point neutre du couplage en étoile la position d'angle relative du rotor, ainsi qu'un circuit d'asservissement (10) qui est réalisé pour appliquer à la commande de moteur (3) une composante de courant d'affaiblissement de champ (FSK) conformément à l'usage prévu pour réduire l'erreur d'angle de commutation $\varepsilon$.

2. Dispositif de régulation (1) selon la revendication 1, **caractérisé en ce qu'**une unité de calcul FSK (11) est reliée en technique de commande à une unité d'obtention de technique de mesure (9) et à un dispositif de spécification de valeur de consigne (7) pour entrer une composante de courant d'affaiblissement de champ variable afin d'appliquer à la commande de moteur (3) 'une composante de courant d'affaiblissement de champ déterminée pour réduire l'erreur d'angle de commutation $\varepsilon$.

3. Dispositif de régulation (1) selon la revendication 2, **caractérisé en ce qu'**en outre un dispositif de traitement de signal (5) est prévu pour détecter des données de fonctionnement du moteur EC (2.2) qui sont dépendantes de la composante de courant d'affaiblissement de champ et pour les amener à un contrôleur (6) de la commande de moteur (3).

4. Dispositif de régulation (1) selon la revendication 1, 2 ou 3, **caractérisé en ce qu'**en tant que composante de courant d'affaiblissement de champ, le courant d'affaiblissement de champ (courant d négatif) ou une valeur d'angle de phase déterminée est utilisé(e).

5. Dispositif de régulation (1) selon l'une quelconque des revendications précédentes, **caractérisé en ce que** pour l'application d'une composante de courant d'affaiblissement de champ, on utilise une composante de courant qui dépend de grandeurs de fonctionnement, telles que le courant, le coefficient de réglage ou le couple du moteur.

6. Procédé permettant de réduire l'erreur d'angle de commutation $\varepsilon$ d'un moteur EC (2) connecté en triphasé (u, v, w) par un couplage en étoile dont les trois phases (u, v, w) sont commutées par une commande de moteur (3), de préférence en utilisant un dispositif de régulation (1) selon l'une quelconque des revendications 1 à 5, dans lequel une détection de position de rotor (4) est effectuée à partir du potentiel de point neutre au point neutre du couplage en étoile des phases de moteur (u, v, w), et une composante de courant d'affaiblissement de champ (F
SK) est appliquée pour réduire l'erreur d'angle de commutation $\varepsilon$ de la commande de moteur (3) pour commuter le moteur EC (2.2).

7. Procédé selon la revendication 6, **caractérisé en ce que** la composante de courant d'affaiblissement de champ est de grandeur constante.

8. Procédé selon la revendication 6, **caractérisé en ce que** la composante de courant d'affaiblissement de champ est une fonction linéaire ou non linéaire, en particulier en fonction d'une grandeur de fonctionnement (Pi) du moteur EC (2.2), en particulier en fonction du couple M ou du courant du moteur EC.

**9.** Procédé selon la revendication 6 ou 7, **caractérisé en ce que** la composante de courant d'affaiblissement de champ est détectée à partir du tracé de courbe d'une courbe FSK = FSK ($\varepsilon$, Pi) pour un paramètre de fonctionnement déterminé (Pi), de préférence un couple déterminé M du moteur EC (2.2), dans lequel d'abord le tracé $\varepsilon = \varepsilon$ (FSK) est établi qui indique la relation entre l'écart d'angle $\varepsilon$ et la composante de courant d'affaiblissement de champ, et sur cette base, une composante de courant constante à appliquer est déterminée à partir du point d'intersection de la courbe FSK ($\varepsilon$, Pi) où un écart d'angle admissible maximal $\varepsilon_{max}$ est défini.

**10.** Procédé selon l'une quelconque des revendications 6, 7 ou 8, **caractérisé en ce que** la composante de courant d'affaiblissement de champ est établie à partir du tracé de courbe de la fonction FSK ($\varepsilon$, Pi) respective d'au moins deux ou de plusieurs tracés de courbe de la courbe FSK ($\varepsilon$, Pi) respective pour respectivement un paramètre de fonctionnement (Pi) différent, de préférence pour différents couples Mi du moteur EC (2.2), et cela permet d'obtenir la relation fonctionnelle entre le paramètre de fonctionnement (Pi) et la composante de courant d'affaiblissement de champ, dans lequel on établit ici d'abord le tracé de courbe FSK ($\varepsilon$, Pi) respectif qui indique la relation entre l'écart d'angle $\varepsilon$ et la composante de courant d'affaiblissement de champ, et sur cette base, une composante de courant à appliquer est déterminée à partir des points d'intersection respectifs des courbes FSK ($\varepsilon$, Pi) où respectivement un écart d'angle admissible prédéterminé $\varepsilon_{def}$ est défini.

**11.** Procédé selon l'une quelconque des revendications 6 à 8, dans lequel le tracé de courbe $\varepsilon = \varepsilon$ (FSK) est établi qui indique la relation entre l'écart d'angle $\varepsilon$ et la composante de courant d'affaiblissement de champ, et cela permet d'établir d'abord l'écart d'angle $\varepsilon_{krit}$ à partir de la courbe de tracé où le moteur EC (2.2) ne peut plus être commuté dans un état de fonctionnement stable en rotation déterminé en ce que l'écart d'angle admissible $\varepsilon$ est successivement augmenté jusqu'à ce que l'état de fonctionnement stable en rotation du moteur EC passe à un état instable qui est défini par un point de courbe $\varepsilon_{krit}$ au point d'application tangent d'une tangente T ayant une pente ST à la courbe $\varepsilon = \varepsilon$ (FSK), dans lequel la tangente T est décalée le long de l'abscisse FSK jusqu'à ce que la tangente T s'applique tangentiellement à un point de courbe de la courbe $\varepsilon$ (FSK), et le point d'intersection entre la tangente T et l'abscisse détermine la valeur pour la composante de courant d'affaiblissement de champ.

Fig. 1

Fig. 2

Fig. 3

Fig. 4

Fig. 5

Fig. 6

Fig. 7

Fig. 8

Fig. 9

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10213375 A1
- DE 4437793 A1

- EP 2709267 A1